# EUROPÄISCHE PATENTSCHRIFT

(11) **EP 3 794 711 B1**
(45) Veröffentlichungstag und Bekanntmachung des Hinweises auf die Patenterteilung: **15.05.2024**
(21) Anmeldenummer: 19761769.9
(22) Anmeldetag: 16.08.2019
(51) Int. Cl.: H02K 1/14

(54) **EINZELZAHNSEGMENT**
SINGLE TOOTH SEGMENT
SEGMENT DENTAIRE INDIVIDUELLE

(30) Priorität: 23.08.2018 EP 18190458
(43) Veröffentlichungstag der Anmeldung: 24.03.2021
(73) Patentinhaber: Siemens Aktiengesellschaft, 80333 München (DE)
(72) Erfinder: SCHUNK, Holger, 97461 Lendershausen (DE)
(74) Vertreter: Siemens Patent Attorneys
(86) Internationale Anmeldenummer: PCT/EP2019/072012
(87) Internationale Veröffentlichungsnummer: WO 2020/038839

(56) Entgegenhaltungen:
- EP-A2- 0 969 581
- DE-A1-102016 218 822
- JP-B2- 6 103 571
- US-A1- 2015 091 409

## Beschreibung

Die Erfindung betrifft ein Einzelzahnsegment, einen Einzelzahn, einen Stator und eine dynamoelektrische rotatorische Maschine.

Dynamoelektrische rotatorische Maschinen, insbesondere Elektromotoren, können einen Stator aufweisen, der aus Einzelzähnen zusammengesetzt ist.

Durch Fertigungstoleranzen können sich die Einzelzähne jedoch im Betrieb verkanten, sodass im Statorjoch ein Spalt entsteht, der z. B. eine Drehmomentwelligkeit der Maschine verschlechtert und eine Leistung der Maschine verringert.

Eine Verringerung der Fertigungstoleranzen ist entweder teuer oder nicht möglich.

In der EP 0 969 581 A1 wird eine Eisenkernanordnung offenbart, bei der die magnetische Leistung, Steifigkeit und mechanische Präzision der Eisenkernanordnung verbessert werden kann. Hierzu sind mehrere plattenförmige Kernsegmente nacheinander angeordnet, um mehrere erste und zweite Kernelemente zu bilden. Randabschnitte benachbarter Kernsegmente des ersten und des zweiten Kernelements sind miteinander gekoppelt. Das erste und das zweite Kernelement sind abwechselnd derart übereinander geschichtet, dass erste Zwischensegmentpositionen, die jeweils zwischen benachbarten ersten Kernsegmenten des ersten Kernelements definiert sind, von der zweiten versetzt sind Zwischensegmentpositionen, die jeweils zwischen benachbarten zwei zweiten Kernsegmenten des zweiten Kernelements in einer Längsrichtung des ersten und des zweiten Kernelements definiert sind, mit diesen Randabschnitten des jeweiligen ersten und zweiten Kernsegmente, die in einer Laminierrichtung aneinander angrenzen, in der das erste und das zweite Kernelement laminiert sind, überlappen sich.

Die Kernsegmente des ersten und des zweiten Kernelements werden durch die Kopplungsmittel relativ zueinander gedreht, um eine umschlossene oder ringartige Konfiguration zu bilden. Aus der DE 10 2016 218822 A1 ist ein Stator für eine elektrische Maschine, umfassend ein in Umfangsrichtung geschlossenes Trägerelement bekannt, wobei das Trägerelement an seiner Innenseite mehrere in Umfangsrichtung angeordnete Eintiefungen aufweist, wobei in eine jeweilige Eintiefung ein einen Zahn des Stators ausbildendes Steckelement einsetzbar ist.

Die US 2015/091409 A1 betrifft einen Anker mit mehreren Kernkonfigurationselementen, mit mehreren Isolatoren, die in die Kernkonfigurationselemente integriert sind, und mit einem Kopplungsabschnitt, der das Paar von Isolationsabschnitten koppelt, mit mehreren Spulendrähten, die jeweils ein Paar gewickelter Abschnitte umfassen, die auf die jeweiligen Kernkonfigurationselemente gewickelt sind, und mit einem Kreuzungsdraht, der das Paar gewickelter Abschnitte miteinander verbindet, wobei mehrere Ankerkonfigurationseinheiten unabhängig voneinander konfiguriert werden, indem ein Paar der Kernkonfigurationselemente mit jedem der Isolatoren integriert wird und der Spulendraht auf das Paar von Kernkonfigurationselementen gewickelt wird.

Der Erfindung liegt die Aufgabe zugrunde, eine dynamoelektrische rotatorische Maschine, aufweisend Einzelzähne, zu verbessern.

Die Lösung der Aufgabe gelingt durch Anspruch 1.

Das Einzelzahnsegment ist für einen Einzelzahn eines Stators einer dynamoelektrischen Maschine geeignet.

Die Lösung der Aufgabe gelingt ferner durch Anspruch 11, d.h. einen Einzelzahn, aufweisend eine Mehrzahl an derartigen Einzelzahnsegmenten.

Die Lösung der Aufgabe gelingt zudem durch Anspruch 13, d.h. einen Stator für eine dynamoelektrische rotatorische Maschine, aufweisend eine Mehrzahl an radial angeordneten Einzelzähnen.

Die Lösung der Aufgabe gelingt zudem durch Anspruch 14, d.h. eine dynamoelektrische rotatorische Maschine, aufweisend einen derartigen Stator.

Vorteilhaft weist ein Einzelzahnsegment genau einen Zahnkopf, genau einen Zahnschaft und genau einen Zahnfuß auf. Das Einzelzahnsegment ist vorzugsweise einstückig.

Der Zahnkopf wird auch als Joch bezeichnet.

Formschlüssig bedeutet hierbei, dass ein Versperren einer relativen Bewegung zweier Bauteile durch konstruktive Details vorliegt. Ein Formschluss kann Bewegungen in eine oder mehrere Richtungen sperren.

Das Einzelzahnsegment ist vorzugsweise ein Blech. Das Einzelzahnsegment ist vorzugsweise aus einem, insbesondere gewalzten, Großblech herausgeschnitten bzw. -gestanzt.

Das Einzelzahnsegment weist vorzugsweise ein Material auf, mit welchem ein Magnetfluss geleitet werden kann. Das Material ist beispielsweise weichmagnetisch.

Vorteilhaft ist der Zahnkopf mit dem weiteren Zahnkopf passgenau, zumindest im Wesentlichen unter Berücksichtigung von Toleranzen, insbesondere Fertigungstoleranzen, verbindbar. Erfindungsgemäß weist der Zahnkopf eine erste Flanke und eine zweite Flanke auf.

Erfindungsgemäß ist die erste Flanke in Radialrichtung betrachtet an einem linken Ende des Zahnkopfes ausgebildet, wobei die zweite Flanke in Radialrichtung betrachtet an einem rechten Ende des Zahnkopfes ausgebildet ist.

Erfindungsgemäß ist die erste Flanke konkav mit einer ersten Krümmung ausgebildet.

Dies bedeutet, die erste Flanke ist mit der ersten Krümmung nach innen gewölbt.

Erfindungsgemäß ist die zweite Flanke konvex mit einer zweiten Krümmung ausgebildet.

Dies bedeutet, die erste Flanke ist mit der zweiten Krümmung nach außen gewölbt.

Eine Krümmung ist hierbei eine Abweichung von einem geraden Verlauf der jeweiligen Flanke, insbesondere eine bogenförmige Abweichung.

In einer weiteren vorteilhaften Ausführungsform der Erfindung entspricht ein Betrag der ersten Krümmung der ersten Flanke einem Betrag der zweiten Krümmung der zweiten Flanke.

Die bedeutet: Die zweite Krümmung ist maßgebend für die erste Krümmung.

Die beschriebene Ausbildung hat den Vorteil, dass der Zahnkopf an seinem linken Ende sowie an seinem rechten Ende formschlüssig mit je einem weiteren gleich ausgebildeten Zahnkopf verbindbar ist. Die beschriebenen Einzelzahnsegmente können serienmäßig hergestellt werden.

In einer weiteren vorteilhaften Ausführungsform der Erfindung ist die erste Flanke als Kreisbogen ausgebildet, wobei die erste Krümmung konstant ist.

In einer weiteren vorteilhaften Ausführungsform der Erfindung ist die zweite Flanke als Kreisbogen ausgebildet, wobei die zweite Krümmung konstant ist.

Die zweite und somit auch die erste Krümmung sind vorzugsweise mittels eines Kreises mit einem Mittelpunkt und einem Radius definierbar.

Erfindungsgemäß ist ein Flächenschwerpunkt des Zahnkopfes ein Mittelpunkt des Kreisbogens der zweiten Flanke.

Dies hat den Vorteil, dass Verschiebungen der Einzelzähne keine Auswirkungen auf Performance und Leistung der dynamoelektrischen rotatorischen Maschine haben. Bei Verschiebungen entstehen keine Spalte zwischen den Einzelzähnen. Verschiebungen und/oder Verformungen sind im Betrieb der Maschine nahezu unvermeidlich.

In einer weiteren vorteilhaften Ausführungsform der Erfindung weist die erste Flanke eine Einbuchtung auf.

In einer weiteren vorteilhaften Ausführungsform der Erfindung weist die zweite Flanke eine Ausbuchtung auf. Die beschriebene Ausführungsform bringt den Vorteil mit sich, dass Verschiebungen der Einzelzähne und somit Spalte zwischen den Einzelzähnen nahezu unterbunden werden.

In einer weiteren vorteilhaften Ausführungsform der Erfindung entspricht ein Betrag einer dritten Krümmung der Einbuchtung einem Betrag einer vierten Krümmung der Ausbuchtung. Durch diese Ausführungsform sind Einbuchtung und Ausbuchtung optimal formschlüssig verbindbar.

Es ist ferner möglich, dass das Einzelzahnsegment eine konkav ausgebildete Flanke und eine Einbuchtung oder Ausbuchtung aufweist. Es ist auch möglich, dass das Einzelzahnsegment eine konvex ausgebildete Flanke und eine Einbuchtung oder Ausbuchtung aufweist.

Die Erfindung bietet den Vorteil, dass die Kontur der Flanken geplant werden kann und dadurch eine Verbesserung der Performance der dynamoelektrischen rotatorischen Maschine ohne Mehrkosten erreicht wird.

Mindestens zwei, vorzugsweise mehr als zwei, Einzelzahnsegmente sind vorteilhaft zu einem Einzelzahn paketiert. In einer bevorzugten Ausführungsform weist ein Einzelzahn ca. 50 bis 100 derartige Einzelzahnsegmente auf.

Die, vorzugsweise baugleichen, Einzelzahnsegmente sind vorzugsweise deckungsgleich hintereinander angeordnet.

Weisen die zum Einzelzahn paketierten Einzelzahnsegmente jeweils eine Einbuchtung auf, weist der gesamte Einzelzahn eine Nut auf.

Weisen die zum Einzelzahn paketierten Einzelzahnsegmente jeweils eine Ausbuchtung auf, weist der Einzelzahn ein Spund auf.

Weisen die zum Einzelzahn paketierten Einzelzahnsegmente jeweils eine konkav ausgebildete erste Flanke auf, weist der Einzelzahn eine konkav ausgebildete erste Flanke auf.

Weisen die zum Einzelzahn paketierten Einzelzahnsegmente jeweils eine konvex ausgebildete zweite Flanke auf, weist der Einzelzahn eine konvex ausgebildete zweite Flanke auf.

Der Einzelzahn ist vorzugsweise elektrisch isoliert ausgeführt. Ein Isolationsmaterial ist beispielsweise ein Lack, insbesondere Backlack.

Vorzugsweise weist jedes Einzelzahnsegment ein Isolationsmaterial auf.

In einer vorteilhaften Ausführungsform der Erfindung weist der Einzelzahn eine Wicklung auf. Das Isolationsmaterial ist vorzugsweise wenigstens auf einer Seite des Einzelzahnsegments aufgebracht. Vorzugsweise ist das Isolationsmaterial beidseitig aufgebracht.

Ein Wicklungsmaterial, insbesondere ein Wicklungsdraht, weist vorzugsweise Kupfer auf. Es sind jedoch auch andere leitfähige einem Fachmann bekannte Wicklungsmaterialien denkbar.

Das Wicklungsmaterial ist vorzugsweise Spulendraht. Das Wicklungsmaterial ist vorteilhaft um den Zahnschaft gewickelt.

Der Einzelzahn wird vorzugsweise zuerst isoliert und anschließend bewickelt.

Zur Bildung des Stators wird vorzugsweise eine Mehrzahl der Einzelzähne radial angeordnet. Vorzugsweise ist eine Anzahl der Einzelzähne ein Vielfaches von 3. Vorzugsweise sind 9 oder 12 Einzelzähne radial angeordnet.

Eine bevorzugte Ausführung des Stators ist die Folgende: Es wird jeder Einzelzahn isoliert und mit Wicklungsdraht bewickelt. Die Mehrzahl an Einzelzähnen wird radial angeordnet und fixiert. Mittels wenigstens einer Platine und/oder mittels Löten werden die Enden des Wicklungsdrahtes verschaltet. Die Einzelzähne werden vorzugsweise verschweißt und in ein Gehäuse (vorzugsweise Aluminium aufweisend) gefügt.

Die Erfindung hat den Vorteil, dass Fertigungstoleranzen der Einzelzahnsegmente im Wesentlichen vernachlässigt werden können. Drehen sich z. B. die Einzelzähne im Statorverbund, insbesondere im Betrieb, in Radialrichtung nach außen oder wird der Einzelzahn verformt, bleibt dennoch aufgrund der beschriebenen Ausführung der Flanken eine Verbindung zweier benachbarter Einzelzähne bestehen. Die Einzelzähne können sich nicht verkanten, es entsteht im Statorjoch kein Spalt. Dies bringt den Vorteil mit sich, dass eine Drehmomentwelligkeit reduziert und eine hohe Leistung gewährleistet werden kann.

Die formschlüssige Verbindung führt vorzugsweise dazu, dass der Statorverbund stabil bleibt, wenn ein Einzelzahn oder mehrere Einzelzähne bewegt wird/werden.

Mittels des beschriebenen Stators und eines Rotors wird vorzugsweise eine dynamoelektrische rotatorische Maschine gebildet .

Die dynamoelektrische rotatorische Maschine ist in einer vorteilhaften Ausführungsform als Zahnspulenmotor ausgeführt.

Die dynamoelektrische rotatorische Maschine ist vorzugsweise eine permanenterregte Synchronmaschine.

Die erfindungsgemäße dynamoelektrische rotatorische Maschine eignet sich besonders gut für Werkzeugmaschinen. Sie ist besonders gut für alle Anwendungen geeignet, die eine hohe Dynamik erfordern. Beispielsweise kann die erfindungsgemäße dynamoelektrische rotatorische Maschine schnell beschleunigt werden.

Zusammen mit einem geeigneten Geber kann die erfindungsgemäße dynamoelektrische rotatorische Maschine für Positionierantriebe eingesetzt werden sowie für Pick-and-Place-Anwendungen wie beispielsweise eine Bestückung von Leiterplatten.

Die Einzelzahnsegmente sind in einer alternativen Ausführungsform als Materiallage hergestellt, wobei dieses Herstellungsverfahren in der Patentschrift mit dem Anmeldeaktenzeichen EP18183457 offenbart ist.

Mit vorzugsweise Backlack lackierte Einzelzahnsegmente sind in der alternativen Ausführungsform vorteilhaft übereinander angeordnet und sind zum Einzelzahnsegment verbacken.

Im Folgenden wird die Erfindung anhand der in den Figuren dargestellten Ausführungsbeispiele näher beschrieben und erläutert. Es zeigen:
- FIG 1: eine Ausführung eines Einzelzahnsegments,
- FIG 2: eine Ausführung einer Mehrzahl radial angeordneter Einzelzahnsegmente,
- FIG 3: eine Darstellung zur Bestimmung eines Radius des Kreisbogens,
- FIG 4: eine Ausführung eines Einzelzahns und
- FIG 5: eine Ausführung einer dynamoelektrischen rotatorischen Maschine.

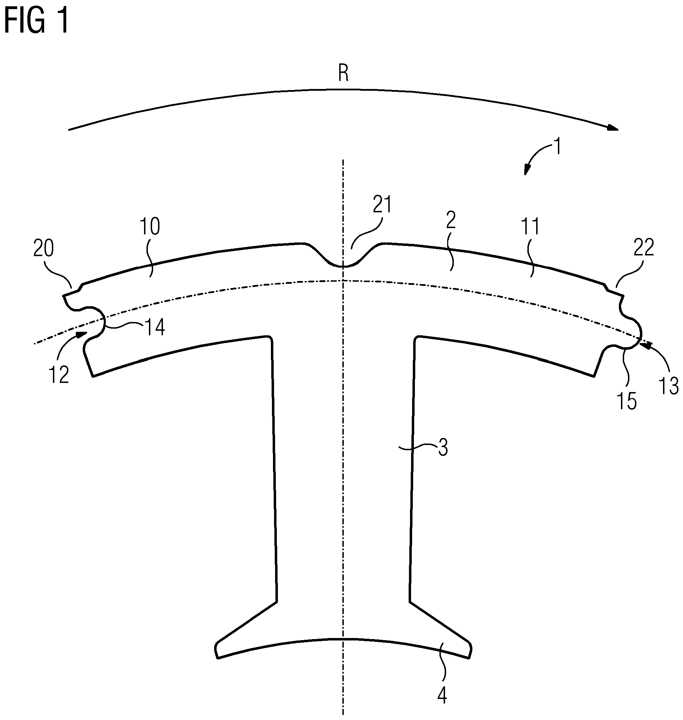

FIG 1 zeigt eine Ausführung eines Einzelzahnsegments 1. Das Einzelzahnsegment 1 weist einen Zahnkopf 2, einen Zahnschaft 3 und einen Zahnfuß 4 auf. Der Zahnkopf 2 weist eine erste Flanke 10 an seinem linken Ende (in Rotationsrichtung R betrachtet) und eine zweite Flanke 11 an seinem rechten Ende auf.

Zudem weist der Zahnkopf 2 eine Einbuchtung 12 und eine Ausbuchtung 13 auf. Die Einbuchtung 12 weist eine dritte Krümmung 14 auf. Die Ausbuchtung 13 weist eine vierte Krümmung 15 auf. Die Krümmungen 14 und 15 sind derart ausgebildet, dass jeweils ein baugleiches Einzelzahnsegment 1 in Radialrichtung R links und rechts angeordnet werden und formschlüssig mit dem in der Figur gezeigten Einzelzahnsegment 1 verbunden werden kann.

Die Figur zeigt zudem die Aussparungen 20, 21 und 22, die beispielsweise für ein Schweißmaterial zur späteren Verschweißung der Einzelzahnsegmente 1 vorgesehen sind. Insbesondere die Aussparung 21 kann auch für einen Verguss eines Mittels der Einzelzahnsegmente 1 gebildeten Stators genutzt werden.

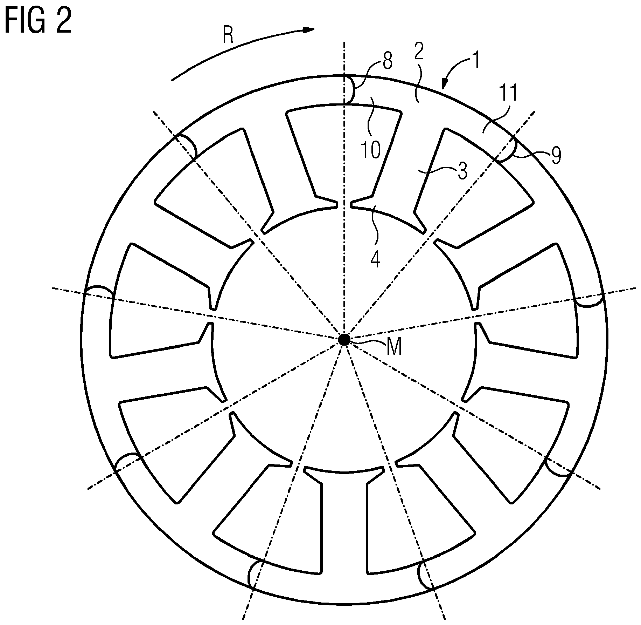

FIG 2 zeigt eine Ausführung einer Mehrzahl an radial angeordneten Einzelzahnsegmenten 1.

Die Figur zeigt neun Einzelzahnsegmente 1, die radial um einen Mittelpunkt M angeordnet sind. Die ersten Flanke 10 am linken Ende des Zahnkopfs 2 ist konkav ausgebildet und weist eine erste Krümmung 8 auf. Die zweite Flanke 11 am rechten Ende ist konvex ausgebildet und weist eine zweite Krümmung 9 auf.

Die Figur zeigt, dass die neun Einzelzahnsegmente 1 baugleich sind und jedes Einzelzahnsegment 1 an seinem linken und an seinem rechten Ende in Radialrichtung betrachtet formschlüssig mit jeweils einem weiteren Einzelzahnsegment verbunden ist. Auf diese Weise wird ein runder Stator gebildet.

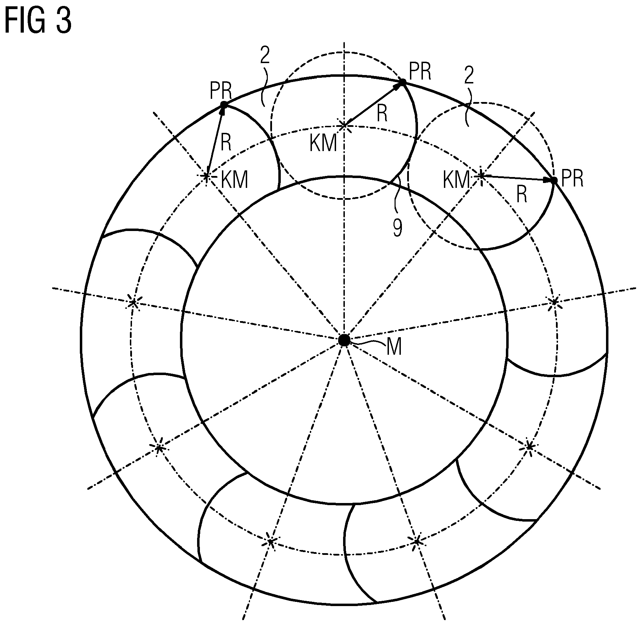

FIG 3 zeigt eine Darstellung zur Bestimmung eines Radius eines Kreisbogens.

Die Krümmung 9 ist - wir auch die Krümmung 8 - konstant. Die zweite Flanke 11 ist in der Figur kreisbogenförmig ausgeführt. Ein Mittelpunkt des Kreisbogens ist in der Figur ein Flächenschwerpunkt KM des Zahnkopfes 2. Die Krümmung 9 wird beschrieben durch den Flächenschwerpunkt KM und ein radial äußeres Ende PR des Zahnkopfes am rechten Ende des Zahnkopfes 2.

Wie bereits beschrieben, wird die erste Flanke am linken Ende des Zahnkopfes 2, konkav ausgebildet und entspricht somit einem Negativ der konvex ausgebildeten Flanke.

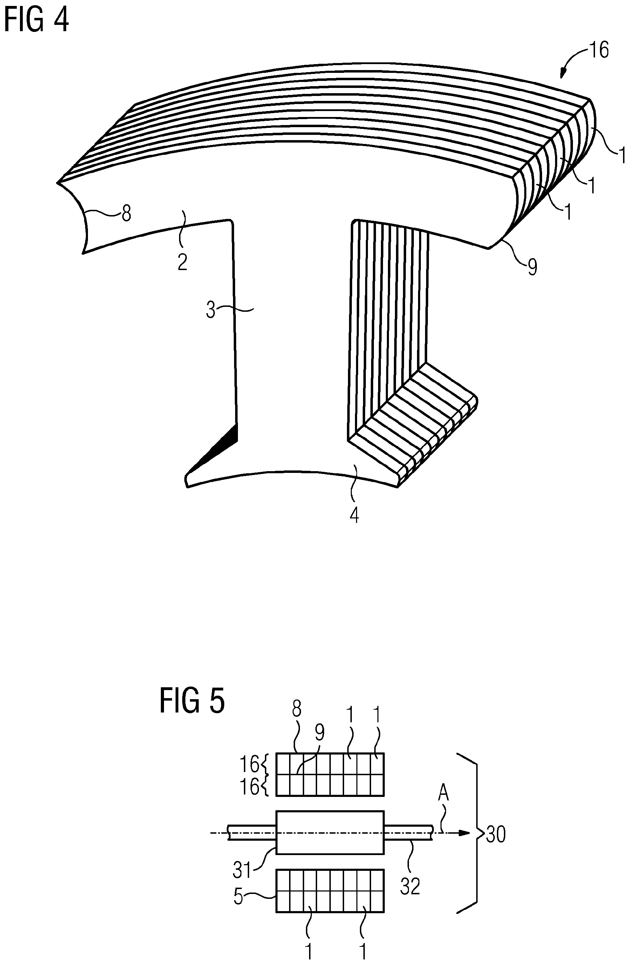

FIG 4 zeigt eine Ausführung eines Einzelzahns 16.

In der Figur ist eine Mehrzahl an Einzelzahnsegmenten 1 hintereinander angeordnet (in anderen Worten: gestapelt) zur Bildung des Einzelzahns 16.

Auch die Figur zeigt eine Ausführung des Einzelzahns 16 mit einer konvex ausgebildeten Flanke und einer konkav ausgebildeten Flanke.

FIG 5 zeigt eine Ausführung einer dynamoelektrischen rotatorischen Maschine 30.

Die dynamoelektrische rotatorische Maschine 30 weist einen Stator 5 sowie einen Rotor 31 auf, der mit einer Welle 32 verbunden ist.

Der Rotor 31 ist in der Figur derart ausgebildet, dass er innerhalb des Stators rotiert. Jedoch ist auch ein Außenläufer denkbar.

Die Einzelzahnsegmente 1 sind, wie die Figur zeigt, vorzugsweise entlang einer Rotationsachse A angeordnet.

Die Figur zeigt, wie die Einzelzahnsegmente 1 und die daraus gebildeten Einzelzähne 16 angeordnet sind.

## Patentansprüche

1. Einzelzahnsegment (1) für einen Einzelzahn eines Stators einer dynamoelektrischen Maschine, umfassend einen Zahnkopf (2), wobei der Zahnkopf (2) auch als Joch des Stators bezeichnet ist, wobei der Zahnkopf (2) derart ausgebildet ist, dass er mit wenigstens einem weiteren Zahnkopf (2) eines weiteren Einzelzahnsegments (1) formschlüssig verbindbar ist, wobei der Zahnkopf (2) eine erste Flanke (10) und eine zweite Flanke (11) aufweist, wobei die erste Flanke (10) in Radialrichtung betrachtet an einem linken Ende des Zahnkopfes (2) ausgebildet ist,
wobei die zweite Flanke (11) in Radialrichtung betrachtet an einem rechten Ende des Zahnkopfes (2) ausgebildet ist,
wobei die erste Flanke (10) konkav mit einer ersten Krümmung (8) ausgebildet ist und wobei die zweite Flanke (11) konvex mit einer zweiten Krümmung (9) ausgebildet ist,
**dadurch gekennzeichnet,**
**dass** ein Flächenschwerpunkt des Zahnkopfes (2) ein Mittelpunkt (KM) eines Kreisbogens der zweiten Krümmung (9) der zweiten Flanke (11) ist.

2. Einzelzahnsegment (1) nach Anspruch 1, wobei das Einzelzahnsegment (1) den Zahnkopf (2), einen Zahnschaft (3) und einen Zahnfuß (4) aufweist.

3. Einzelzahnsegment (1) nach einem der vorhergehenden Ansprüche, wobei der Zahnfuß (4) zur Anordnung radial näher zu einem Rotor (31) vorgesehen ist und der Zahnkopf (2) zur Anordnung radial entfernter vom Rotor (31) vorgesehen ist.

4. Einzelzahnsegment (1) nach einem der vorhergehenden Ansprüche, wobei ein Betrag der ersten Krümmung (8) der ersten Flanke (10) einem Betrag der zweiten Krümmung (9) der zweiten Flanke (11) entspricht.

5. Einzelzahnsegment (1) nach einem der vorhergehenden Ansprüche, wobei die erste Flanke (10) als Kreisbogen ausgebildet ist, wobei die erste Krümmung (8) konstant ist.

6. Einzelzahnsegment (1) nach einem der vorhergehenden Ansprüche, wobei die zweite Flanke (11) als Kreisbogen ausgebildet ist, wobei die zweite Krümmung (9) konstant ist.

7. Einzelzahnsegment (1) nach einem der vorhergehenden Ansprüche, wobei das Einzelzahnsegment (1) zur Anordnung radial um einen Mittelpunkt (M) vorgesehen ist, wobei jedes Einzelzahnsegment (1) einen Zahnkopf (2), einen Zahnschaft (3) und einen Zahnfuß (4) aufweist, wobei der Zahnfuß (4) zur Anordnung radial näher zum Mittelpunkt (M) vorgesehen ist und der Zahnkopf (2) zur Anordnung radial entfernter vom Mittelpunkt (M) vorgesehen ist.

8. Einzelzahnsegment (1) nach einem der vorhergehenden Ansprüche, wobei die erste Flanke (10) eine Einbuchtung (12) aufweist.

9. Einzelzahnsegment (1) nach einem der vorhergehenden Ansprüche, wobei die zweite Flanke (11) eine Ausbuchtung (13) aufweist.

10. Einzelzahnsegment (1) nach einem der vorhergehenden Ansprüche, wobei ein Betrag einer dritten Krümmung (14) der Einbuchtung (12) einem Betrag einer vierten Krümmung (15) der Ausbuchtung (13) entspricht.

11. Einzelzahn (16), aufweisend eine Mehrzahl an Einzelzahnsegmenten (1) nach einem der Ansprüche 1 bis 10.

12. Einzelzahn (16) nach Anspruch 11, aufweisend eine Wicklung.

13. Stator (5) für eine dynamoelektrische rotatorische Maschine (30), aufweisend eine Mehrzahl an radial angeordneten Einzelzähnen (16) nach einem der Ansprüche 11 oder 12.

14. Dynamoelektrische rotatorische Maschine (30), aufweisend einen Stator (5) nach Anspruch 13.

15. Dynamoelektrische rotatorische Maschine (30) nach Anspruch 14, ausgeführt als Zahnspulenmotor.

## Claims

1. Individual tooth segment (1) for an individual tooth of a stator of a dynamoelectric machine, comprising a tooth head (2), wherein the tooth head (2) is also referred to as a yoke of the stator, wherein the tooth head (2) is designed in such a way that the tooth head can be connected in a form-fitting manner to at least one further tooth head (2) of a further individual tooth segment (1), wherein the tooth head (2) has a first flank (10) and a second flank (11), wherein the first flank (10) is formed on a left end of the tooth head (2) viewed in the radial direction,
wherein the second flank (11) is formed on a right end of the tooth head (2) viewed in the radial direction,
wherein the first flank (10) is formed concavely with a first curvature (8), and wherein the second flank (11) is formed convexly with a second curvature (9),
**characterised in that**
a centre of area of the tooth head (2) is a centre point (KM) of a circular arc of the second curvature (9) of the second flank (11).

2. Individual tooth segment (1) according to claim 1, wherein the individual tooth segment (1) has the tooth head (2), a tooth shaft (3) and a tooth base (4).

3. Individual tooth segment (1) according to one of the preceding claims, wherein the tooth base (4) is provided for arrangement radially closer to a rotor (31) and the tooth head (2) is provided for arrangement radially further away from the rotor (31).

4. Individual tooth segment (1) according to one of the preceding claims, wherein an amount of the first curvature (8) of the first flank (10) corresponds to an amount of the second curvature (9) of the second flank (11).

5. Individual tooth segment (1) according to one of the preceding claims, wherein the first flank (10) is designed as a circular arc, wherein the first curvature (8) is constant.

6. Individual tooth segment (1) according to one of the preceding claims, wherein the second flank (11) is designed as a circular arc, wherein the second curvature (9) is constant.

7. Individual tooth segment (1) according to one of the preceding claims, wherein the individual tooth segment (1) is provided for arrangement radially around a centre point (M), wherein each individual tooth segment (1) has a tooth head (2), a tooth shaft (3) and a tooth base (4), wherein the tooth base (4) is provided for arrangement radially closer to the centre point (M) and the tooth head (2) is provided for arrangement radially further from the centre point (M).

8. Individual tooth segment (1) according to one of the preceding claims, wherein the first flank (10) has an indentation (12).

9. Individual tooth segment (1) according to one of the preceding claims, wherein the second flank (11) has a projection (13).

10. Individual tooth segment (1) according to one of the preceding claims, wherein an amount of a third curvature (14) of the indentation (12) corresponds to an amount of a fourth curvature (15) of the projection (13).

11. Individual tooth (16), having a plurality of individual tooth segments (1) according to one of claims 1 to 10.

12. Individual tooth (16) according to claim 11, having a winding.

13. Stator (5) for a dynamoelectric rotational machine (30), having a plurality of radially arranged individual teeth (16) according to one of claims 11 or 12.

14. Dynamoelectric rotational machine (30), having a stator (5) according to claim 13.

15. Dynamoelectric rotational machine (30) according to claim 14, designed as a toothed coil motor.

## Revendications

1. Segment (1) denté individuel pour une dent individuelle d'un stator d'une machine dynamoélectrique, comprenant une tête (2) de dent, dans lequel la tête (2) de dent est désignée également comme culasse du stator, dans lequel la tête (2) de dent est constituée, de manière à pouvoir être reliée à complémentarité de forme à au moins à une autre tête (2) de dent d'un autre segment (1) denté individuel, dans lequel la tête (2) de dent a un premier flanc (10) et un deuxième flanc (11), dans lequel le premier flanc (10) est, considéré dans la direction radiale, formé à une extrémité gauche de la tête (2) de la dent, dans lequel le deuxième flanc (11) est, considéré dans la direction radiale, formé à une extrémité droite de la tête (2) de la dent,
dans lequel le premier flanc (10) est concave en ayant une première courbure (8) et dans lequel le deuxième flanc (11) est convexe en ayant une deuxième courbure (9),
**caractérisé**
**en ce qu'**un centre de gravité en surface de la tête (2) de la dent est un centre (KM) d'un arc de cercle de la deuxième courbure (9) du deuxième flanc (11).

2. Segment (1) denté individuel suivant la revendication 1, dans lequel le segment (1) denté individuel a la tête (2) de la dent, un fût (3) de dent et un pied (4) de dent.

3. Segment (1) denté individuel suivant l'une des revendications précédentes, dans lequel le pied (4) de la dent est prévu pour le montage radialement près d'un rotor (31) et la tête (2) de la dent est prévue pour le montage radialement loin du rotor (31).

4. Segment (1) denté individuel suivant l'une des revendications précédentes, dans lequel une valeur de la première courbure (8) du premier flanc (10) correspond à une valeur de la deuxième courbure (9) du deuxième flanc (11).

5. Segment (1) denté individuel suivant l'une des revendications précédentes, dans lequel le premier flanc (10) est constitué sous la forme d'un arc de cercle, la première courbure (8) étant constante.

6. Segment (1) denté individuel suivant l'une des revendications précédentes, dans lequel le deuxième flanc (11) est constitué sous la forme d'un arc de cercle, la deuxième courbure (9) étant constante.

7. Segment (1) denté individuel suivant l'une des revendications précédentes, dans lequel le segment (1) denté individuel est prévu pour le montage radialement autour d'un centre (M), dans lequel chaque segment (1) denté individuel a une tête (2) de dent, un fût (3) de dent et un pied (4) de dent, dans lequel le fût (4) de la dent est prévu pour le montage radialement près du centre (M) et la tête (2) de la dent pour le montage radialement loin du centre (M).

8. Segment (1) denté individuel suivant l'une des revendications précédentes, dans lequel le premier flanc (10) a une bosse (12) rentrante.

9. Segment (1) denté individuel suivant l'une des revendications précédentes, dans lequel le deuxième flanc (11) a une bosse (13) sortante.

10. Segment (1) denté individuel suivant l'une des revendications précédentes, dans lequel la valeur d'une troisième courbure (14) de la bosse (12) rentrante correspond à une valeur d'une quatrième courbure (15) de la bosse (13) sortante.

11. Dent (16) individuelle comportant une pluralité de segments (1) dentés individuels suivant l'une des revendications 1 à 10.

12. Dent (16) individuelle suivant la revendication 11, comportant un enroulement.

13. Stator (5) d'une machine (30) dynamoélectrique tournante, comportant une pluralité de dents (16) individuelles disposées radialement suivant l'une des revendications 11 ou 12.

14. Machine (30) dynamoélectrique tournante, comportant un stator (5) suivant la revendication 13.

15. Machine (30) dynamoélectrique tournante suivant la revendication 14, réalisée sous la forme d'un moteur à bobine à dent.
